# EUROPEAN PATENT APPLICATION

(11) **EP 4 621 251 A1**
(43) Date of publication of application: **24.09.2025**
(21) Application number: 25164309.4
(22) Date of filing: 18.03.2025
(51) Int. Cl.: F16B 37/12

(54) **THREADED INSERT AND CONTACT ASSEMBLY WITH THREADED INSERT**

(30) Priority: 18.03.2024 DE 102024107628
(71) Applicant: TE Connectivity Solutions GmbH, 8200 Schaffhausen (CH)
(72) Inventor: BUCHHOLZ, Ron, 8200 Schaffhausen (CH); WOLF, Marcus, 8200 Schaffhausen (CH); KAEHNY, Frank, 8200 Schaffhausen (CH); EHEIM, Manuel, 8200 Schaffhausen (CH); DISTLER, Patrick, 8200 Schaffhausen (CH); WEBER, Alexander, 8200 Schaffhausen (CH); HOFFMANN, Bjoern, 8200 Schaffhausen (CH)
(74) Representative: Grünecker Patent- und Rechtsanwälte PartG mbB

(57) **Abstract**

The invention relates to a threaded insert (1) to screw into a busbar (64), particularly a busbar (64) of a battery module (102), wherein the threaded insert (1) comprises a self-tapping or self-forming external thread (4). The invention further relates to a contact assembly (2) with a threaded insert (1), a busbar (64) and a contact screw (44) that can be screwed into the threaded insert (1). The threaded insert (1) preferably comprises a touch protection (60) and is screwed into the busbar (64) and in particular into a thread (6) in the busbar (64) that has been cut with the external thread (4) of the threaded insert (1).

## Description

The present invention relates to a threaded insert to screw into a busbar and to a contact assembly with the treaded insert.

A reliable electrical connection of battery modules, for example in e-mobility, is indispensable. High currents must be transmitted with as little loss as possible. The components and contact assemblies used for this purpose must transmit reliably and safely despite changing environmental conditions and in a vibration-prone environment. In order to meet these requirements, screw connections are used in some applications for connecting the busbars that connect the battery modules. Due to the high electrical voltage, the screw connections must be contact-protected and contact-proof as soon as people start working on them. Despite the protection against contact or touch protection, the screw connections should be easy to assemble.

The underlying problem of the invention is therefore to provide a screw connection that connects busbars in a contact-protected manner, withstands strongly fluctuating environmental influences, connects the busbars securely to one another even in a vibration-loaded environment and is easy to assemble.

The present invention solves this problem on the one hand by means of a threaded insert to screw into a busbar, in particular of a battery module, wherein the threaded insert comprises a self-tapping or self-forming external thread, and on the other hand by means of a contact assembly with the threaded insert, with a busbar and with a contact screw that can be screwed into the threaded insert.

This solution permits a simplification in the manufacture of the contact assembly, since no thread has to be cut in advance into the base material of the busbar or battery module, for example copper. Another advantage of the threaded insert is that its material can be optimally matched to the material of the busbar and the screw to be screwed in the threaded insert. In this way, high-strength connections can be achieved that are easy to manufacture.

The invention can be further improved by the following configurations, which are each preferred in their own right, independent of one another and can be arbitrarily combined with one another.

For example, according to a first configuration, the threaded insert can have a material with a high strength - in particular a higher strength than copper - or consist of such a material. Due to the stronger material, higher pretensioning forces can be achieved in the screw connection. In addition, the threaded insert is subject to less wear when tapping or thread forming.

The threaded insert can be made of the same material as the contact screw or of a material with a higher strength than the contact screw.

Preferably, the threaded insert is made of steel, in particular stainless steel. Together with a contact screw made of steel, this results in a high-strength and corrosion-resistant steel-steel thread pairing.

In another configuration, the threaded insert can be made of aluminum or an aluminum-containing material, which offers high corrosion resistance.

The threaded insert can be configured in the shape of a hollow cylinder and can have a through-opening that penetrates the entire threaded insert and has an internal thread. A closed bottom is also possible. The internal thread can preferably be metric and, for example, receive a complementary metric screw. This simplifies the procurement of compatible contact screws and makes the threaded insert more accessible and versatile.

The internal thread can extend over a longer area in the longitudinal direction of the threaded insert than the external thread. This allows for a larger contact surface between the threaded insert and the fastening element screwed into the threaded insert, for example a contact screw. The larger contact surface reduces contact resistance and losses. The longitudinal direction corresponds to the axial direction of the threaded insert in this case, thus the direction in which the threaded insert is screwed in.

In another configuration, the internal thread of the threaded insert may extend over a shorter area than the external thread of the threaded insert. This embodiment offers the possibility of faster assembly, since fewer turns are needed to make the connection between the threaded insert and the component to be screwed into its internal thread.

The threaded insert may have a head that is provided with a screw drive. In this case, the head may be configured as a cylinder head with a flange. Other configurations include, for example, a raised head, an external hexagon, an internal hexagon and/or a countersunk head.

The screw drive can be used to attach a tool for turning the threaded insert. Turning is preferably carried out about the longitudinal direction or the screw-in direction in a circumferential direction of the threaded insert. In this case, the screw-in direction points from the head to the other free end of the threaded insert, namely the end that points towards the surface of the component into which the threaded insert is inserted.

The shape of the screw drive can be as desired and can be, for example, an internal hexagon. The complementary tool shape is then a hex wrench with a hexagonal profile that can be engaged with the internal hexagon of the threaded insert to turn the threaded insert. This configuration is particularly preferred for reaching heads that are difficult to access.

In another configuration, the screw drive can be an external hexagon. Preferably, the head is then configured as a hexagon head. The tool can then grasp the head or the screw drive. The drive geometry or the connection geometry can therefore be arbitrary and can also have other shapes. As with an internal hexagon or Torx drive, the tool can be inserted into a depression in the threaded insert or can grasp the outer circumference or an outer contour of the threaded insert.

One configuration can provide both an internal depression and an external contour on a head that can be grasped by a tool, in order to be more flexible in the choice of tools for better accessibility, power transmission and manageability during assembly. Then the head, for example, comprises both an internal hexagon and an external hexagon.

In another configuration, during assembly, the threaded insert can be held and aligned on a screw that is screwed into the internal thread of the threaded insert.

The head may further comprise an undercut, that is, a thread-free area below the head, such as a narrow depression, a groove or a recess.

The threaded insert may have a flange that projects in a radial direction beyond the head and is arranged between the external thread and the head. The flange allows the head to lie flush and flat against the component in which the threaded insert is inserted. The flange enables good force transmission and a defined screw-in depth.

The internal thread of the threaded insert can extend up to the end opposite the head.

The threaded insert may have a touch protection. This touch protection may preferably consist of an electrically insulating or dielectric material, such as plastic. The touch protection may be configured as a protective cap and may, for example, be cylindrical and have approximately the same diameter as the threaded insert. The touch protection may have a square or rectangular shape, be conical or have an arbitrary other shape.

The touch protection is preferably provided with one or more openings and/or recesses. The at least one opening in the touch protection can be sufficiently large so that the contact screw to be connected fits through the opening in order to be screwed to the threaded insert.

The at least one recess and/or opening can be used as an alternative to the screw drive in order to screw in the threaded insert. For this purpose, the touch protection is preferably already firmly connected to the threaded insert.

At least one recess can further be used to mount the touch protection on the threaded insert, for example by turning the touch protection, as with a screw cap or bayonet lock, for example. In this configuration, the threaded insert comprises an additional thread or complementary projections that hold a part of the touch protection in an end position to which the touch protection is turned.

The head of the threaded insert can also be provided with a form-fit element that holds the touch protection in a form-fit manner on the threaded insert.

The form-fit element of the head can comprise an axial undercut in one configuration. The undercut can be formed by a shoulder. The shoulder can be formed, for example, by a depression running in sections or continuously in the circumferential direction, such as a groove or a recess, or by a projection, such as a latching lug or a rib running in sections or continuously in the circumferential direction. The touch protection, for example the protection cap, can latch with the head at the undercut.

The touch protection may have a form-fit element complementary to the form-fit element of the head. If the form-fit element of the head is a projection, for example, the form-fit element of the touch protection is a depression complementary to it. If the form-fit element of the touch protection is a depression, the form-fit element of the touch protection is a complementary projection.

The form-fit element of the touch protection is arranged in the interior of the latter, which is preferably configured to complement the head of the threaded insert. The form-fit element of the touch protection also preferably has an axial undercut, which is configured to engage with the axial undercut of the touch protection.

The touch protection, in particular the surface of the touch protection pointing towards the threaded insert, may abut the end of the threaded insert that is provided with the screw drive, and may be attached to the surface of the head facing the touch protection. For example, the touch protection can be connected to the screw drive. The touch protection can be put over the head, at least in sections.

In a further configuration, the touch protection can be connected frictionally to the threaded insert. The diameter of the threaded insert at the point where the touch protection is or will be attached should be slightly larger than the inner diameter of the touch protection or the opening of the touch protection in order to create a press fit. A frictional connection provides a high load capacity and even load distribution and does not require any additional fastening elements. The touch protection is preferably pressed onto the threaded insert, in particular its head, when there is a frictional connection.

In addition, it is possible that the touch protection is injection molded onto the threaded insert. This increases the design flexibility of the touch protection and complex shapes are also possible. This favors mass production, so that costs can be reduced, in particular for large quantities. Furthermore, the additional assembly of the touch protection on the threaded insert can be dispensed with.

For attaching the threaded insert, the component of the contact assembly receiving the threaded insert may have a thread-free hole for receiving the threaded insert. In particular, the busbar of the contact assembly may have a thread-free hole for receiving the threaded insert. The diameter of the thread-free hole can be adapted in size depending on the material and external thread of the threaded insert.

The threaded insert may be screwed into the busbar and in particular into a thread tapped/formed with its external thread in the busbar. The thread that is tapped from the external thread of the threaded insert can be an internal thread that is complementary to the external thread of the threaded insert. Screwing in provides a high holding force and tensile strength because the threaded insert anchors itself firmly in the material and also has a large contact surface to safely carry and distribute the forces.

Another embodiment of the contact assembly provides for the threaded insert to be pressed into the busbar. It can be pressed in with or without an external thread. This can save costs, as no special equipment is required for pressing.

In one embodiment of the contact assembly, the contact screw passes through a second busbar and is screwed in the longitudinal direction into the threaded insert, in particular into the internal thread of the threaded insert. In this way, the contact assembly connects the two busbars to one another.

In the following, the invention is described with reference to the drawings by means of an embodiment. The same reference signs are always used in the drawings for elements that correspond to one another in terms of function and/or structure.

In accordance with the description above, a feature of the embodiment can be omitted if the technical effect associated with that feature is not important for a particular application. Conversely, a feature not yet present can also be added to the embodiment in accordance with the description above if the technical effect of the feature to be added is important for a particular application.

It is shown by:
- Fig. 1: a schematic view of the threaded insert;
- Fig. 2: a schematic cross-sectional view of the threaded insert;
- Fig. 3: a schematic view of the contact assembly with busbar and threaded insert with touch protection;
- Fig. 4: a schematic view of the contact assembly with a busbar and threaded insert; and
- Fig. 5: a schematic view of the contact assembly with a second busbar and the contact screw.

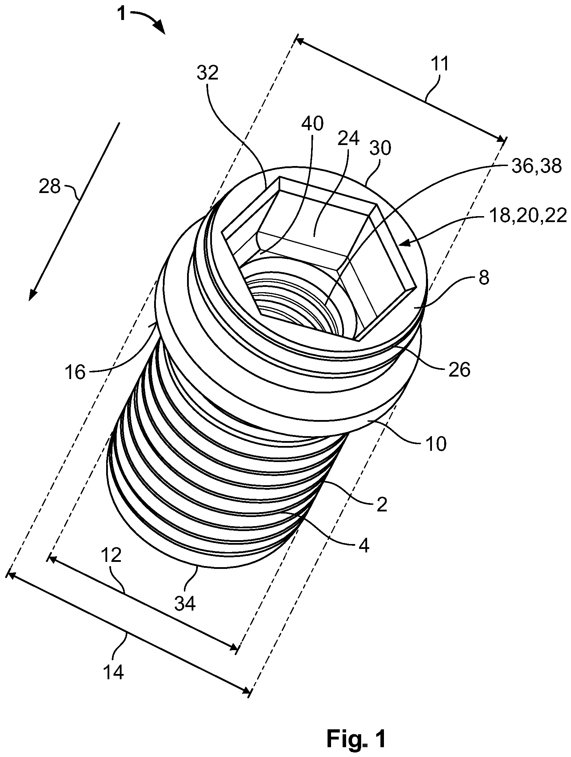

Fig. 1 shows an embodiment of a threaded insert 1. The threaded insert 1 can be configured in the shape of a hollow cylinder and made of a high-strength material such as steel. Depending on the application, it can also be made of stainless steel.

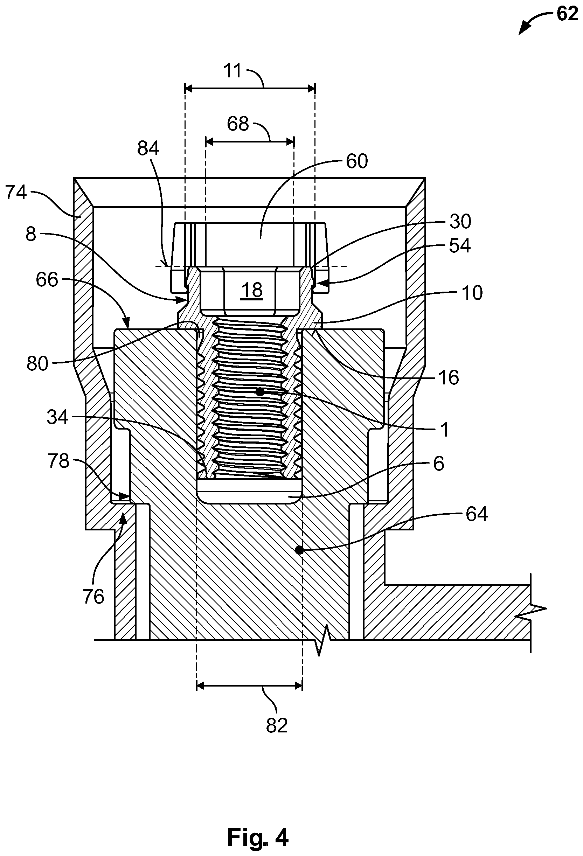

On its outer circumference 2, the threaded insert 1 comprises an external thread 4, at least in sections. This external thread 4 is preferably a self-tapping or, used synonymously here, a self-forming external thread 4. Self-tapping or self-forming means that the threaded insert 1 itself produces the complementary thread 6 (Fig. 4) required by it in the workpiece into which the threaded insert 1 is to be screwed, without any further aids. By screwing the threaded insert 1 into the material of the workpiece, the specially adapted external thread 4 of the threaded insert 1 cuts progressively into the material - the material is displaced and formed and a thread 6 is created, in which the threaded insert 1 is held. The resulting thread 6 can be an internal thread.

The threaded insert 1 may comprise a head 8, which in turn may have a flange 10. The diameter 11 of the head 8 is greater than the diameter 12 of the external thread 4. The flange 10 has a diameter 14 that is greater than the diameter 11 of the head 8. The flange 10 comprises a lower annular surface 16 that faces the end of the threaded insert 1 opposite the head 8.

Furthermore, the threaded insert 1 on the head 8 comprises a screw drive 18. Exemplarily, an internal hexagon 20 is shown here. In another configuration, the screw drive 18 can be an external hexagon. Incidentally, the drive geometry or also the connection geometry 22 is arbitrary and the shapes are freely selectable. For example, a tool (not shown) can be inserted into the depression 24 inside the threaded insert 1 or can grasp the outer circumference or outer contour 26 of the threaded insert 1. For example, a hex wrench can be used to screw in the threaded insert 1.

The screw drive 18 can be chamfered at the upper end 30 opposite the screw-in direction 28 for easy insertion of a tool at the upper edge 32 of the depression 24 or of the internal hexagon 22. The screw-in direction 28 points axially from the head 8 to the free end 34 of the threaded insert 1 and preferably coincides with the axial direction of the threaded insert 1. In one configuration, both an internal profile and an external profile can be provided on the threaded insert 1 for engagement with a complementary tool.

Furthermore, the threaded insert 1 has a through-opening 36 that penetrates the entire threaded insert in the screw-in direction or also in the longitudinal direction 28 and that is provided with an internal thread 38. This internal thread 38 can preferably be metric for versatile use.

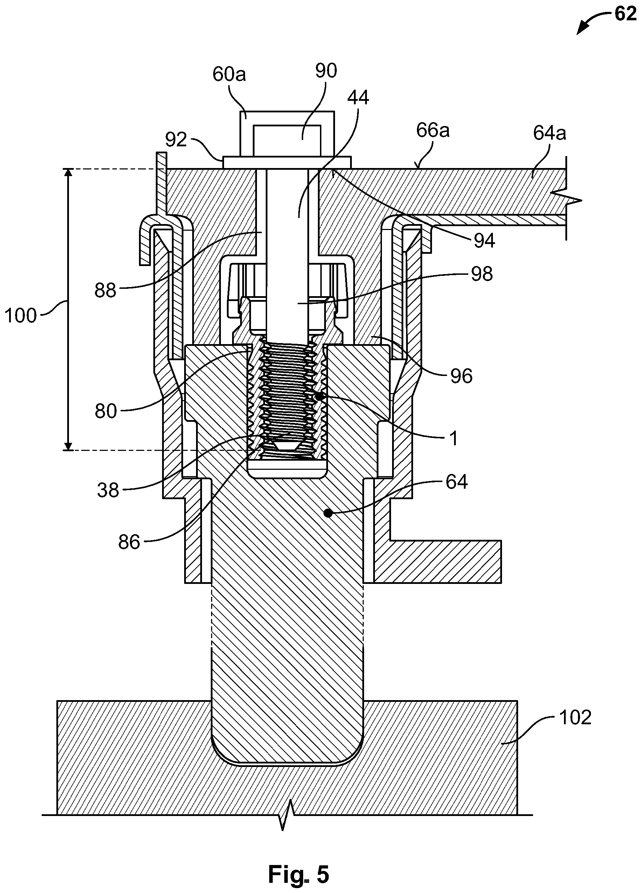

The through-opening 36, in particular in the area 40 of the screw drive 18, should be larger than the diameter 42 of the internal thread 38, in order to be able to screw a component to be screwed in, such as a contact screw 44 (see Fig. 5), in the screw-in direction 28, into the threaded insert 1, in particular into the internal thread 38 of the threaded insert 1. At the head 8, especially at the screw drive 18, the threaded insert 1 can be thread-free.

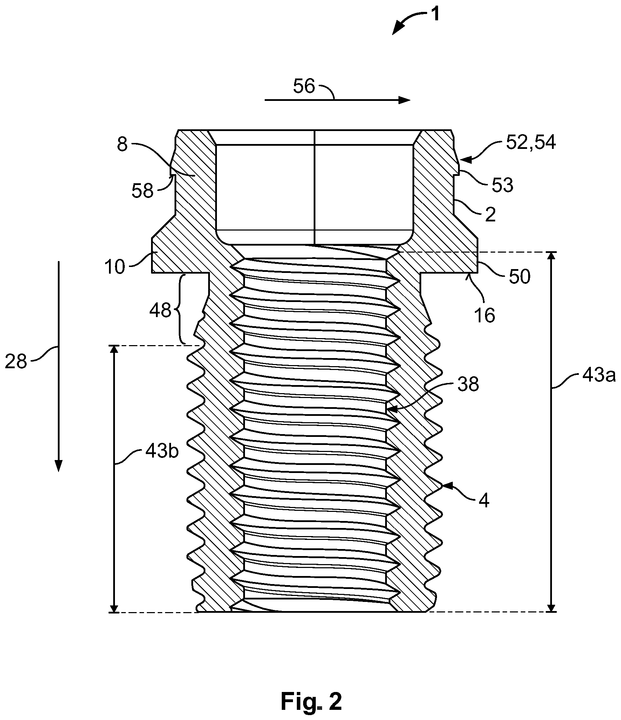

In Fig. 2, a sectional view of an embodiment of the threaded insert 1 is shown, having the internal thread 38, which is preferably metric, the self-tapping external thread 4 and the head 8.

The internal thread 38 can extend in the longitudinal direction 28 over a longer area 43a than the external thread 4. In this case, the external thread 4 extends over a shorter area 43b in the longitudinal direction. In another configuration, the internal thread 38 can extend over a shorter area 43a in the longitudinal direction 28 than the external thread 4.

Under the flange 10 of the head 8, the threaded insert 1 can comprise an undercut 48, that is, a thread-free area below the head 8.

The flange 10 of the head 8 preferably forms an annular surface 16, the plane of which extends perpendicularly to the screw-in direction 28 and points towards the other end 34 of the threaded insert 1.

Preferably, the head 8 is configured to be predominantly cylindrical. The head 8 can therefore be configured as a cylinder head. In this illustration, the flange 10 has a slightly conical shape. Other possible embodiments include, among others, a hexagonal head, a raised head, a flat round head or a countersunk head. Exemplarily, the head 8 is shown here as a cylinder head with a flange 10.

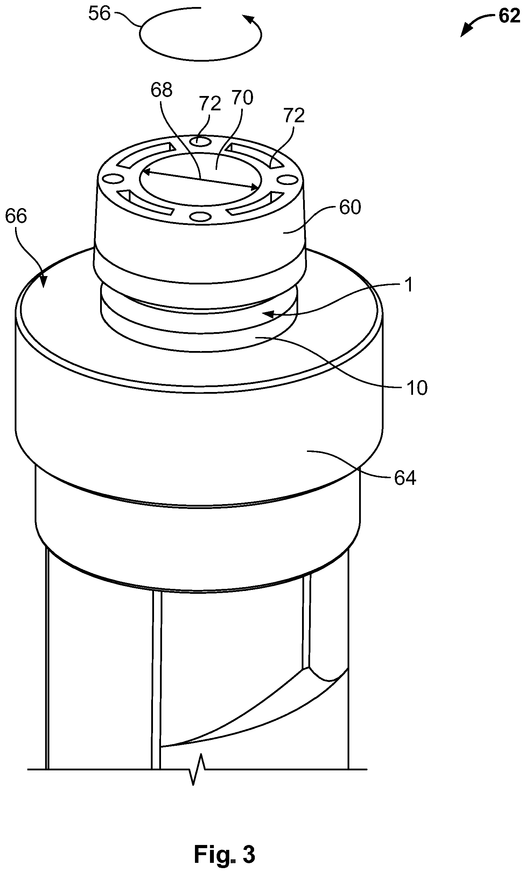

At the head 8, the threaded insert 1 can comprise a form-fit element 52. The form-fit element 52 can comprise an axial undercut 53. For example, the form-fit element 52 can be a latching protrusion 54. The latching protrusion 54 can preferably extend around the entire outer circumference 2 of the head 8 and be continuous. In another configuration, it is possible that the head 8 has several latching protrusions 54, which, for example, are spaced apart equidistantly from one another in the circumferential direction 56. The latching protrusion 54 can, for example, be a latching lug, the latching surface 58 of which can run parallel to the annular surface 16 of the flange 10. A touch protection 60 can latch onto the latching protrusion 54 (see Fig. 3). The touch protection 60 can consist of a dielectric material such as plastic and be cylindrical. Other configurations include, for example, a cuboid, conical or spherical touch protection 60.

Fig. 3, for example, shows an embodiment of a contact assembly 62 that comprises a busbar 64 and a threaded insert 1 with the touch protection 60. The busbar 64 preferably has a contact surface 66 that can run parallel to the annular surface 16 (Fig. 2) of the flange 10.

In Fig. 3, the threaded insert 1 is shown screwed into the busbar 64. The inner diameter 68 of the touch protection 60 or an opening 70 of the touch protection 60 should be larger than the diameter of a contact screw 44 (Fig. 5), so that the contact screw 44 can be screwed into the threaded insert 1.

The touch protection 60 can also have recesses 72 that can be used for assembly with a component or tool. Similarly, the recesses 72 can be used to release the latch of the touch protection 60 with the threaded insert 1, for example using a tool adapted for this purpose.

Fig. 4 shows an embodiment of a contact assembly 62 with a busbar 64 and a housing 74. The housing 74 surrounds both the busbar 64 and the screwed-in threaded insert 1 with the touch protection 60. The housing 74 can have shoulders 76, on which the busbar 64 or projections 78 of the busbar 64 can be supported.

The threaded insert 1 can be screwed into the busbar 64 by inserting it into a hole 80 in the busbar 64 and using a tool to turn the screw drive 18 in the busbar 64 about the screw-in direction. In doing so, the threaded insert 1 cuts a thread 6 into the busbar 64, in which the threaded insert 1 is held. The diameter 82 of the hole 80 depends on the diameter 14 of the external thread 4 and/or the selected material of the busbar 64.

Preferably, the threaded insert 1 can be screwed in up to the flange 10. This means that the annular surface 16, which points to the end 34 that is opposite the head 8, can abut the contact surface 66 of the busbar 64.

In this configuration, the touch protection 60 is preferably connected to the threaded insert 1 via the latching protrusion 54 in a form-fitting manner. Other embodiments may provide a frictional connection or a form-fit connection with other form-fit elements. For example, clamping rings, grooves and feather keys or wedges can be used to connect the touch protection 60 with the threaded insert 1, in particular with the head 8 of the threaded insert 1. In the case of the frictional connection, the diameter, in particular the outer diameter 11 of the head 8 of the threaded insert 1, may be slightly larger than the inner diameter 68 of the touch protection 60, resulting in a press fit.

Another configuration provides that the touch protection 60 can be injection molded directly onto the head 8 of the threaded insert 1. The touch protection 60 can be fully or partially put over the head 8. Opposite the longitudinal direction 28, the touch protection 60 can be attached to the horizontal surface 84 at the upper end 30 of the threaded insert 1 and, for example, can be connected to the screw drive 18.

Fig. 5 shows an embodiment of the contact assembly 62 with the busbar 64, the threaded insert 1 screwed into the busbar64, and a second busbar 64a, through which a contact screw 44 passes and the external thread 86 of which engages with the internal thread 38 of the threaded insert 1.

The second busbar 64a preferably has a through-hole 88 through which the contact screw 44 can pass. The contact screw 44 can have a screw head 90 with a screw flange 92, the supporting surface 94 of which rests on the contact surface 66a of the busbar 64a. The contact screw 44 can preferably have a touch protection 60a. This touch protection 60a can be used to screw the contact screw 44 into the threaded insert 1 and to make the assembly safe against contact.

The busbar 64a, through which the contact screw 44 passes, can also be configured so that at least a part 96 of the busbar 64a is in contact with the contact surface 66 of the first busbar 64. In this way, this contact can be strengthened and secured by the threaded connection.

In this illustration, the contact screw 44 comprises an area 98 in the longitudinal direction 28 where there is no thread. In other words, the contact screw 44 does not have a thread over its entire length 100, but only in sections - and in Fig. 5 it is thread-free, particularly in the area 98 below the screw flange 92. The thread-free area 98 can make it easier to screw in the contact screw 44, since fewer turns are needed to screw in the contact screw 44. Other configurations provide a contact screw 44 that is threaded over the entire length 100 of the contact screw 44.

In another configuration, the threaded insert 1 can be pressed into the busbar 64. This can be done with the self-tapping external thread 4. The pressing-in can preferably be done without an external thread 4 on the threaded insert 1. The busbar 64 can then, as already shown in the configuration in Fig. 4, have a hole 80 into which the threaded insert 1 is pressed. This hole 80 can be configured to be thread-free.

By means of the contact screw 44, which is in engagement with the threaded insert 1, the busbar 64 is connected to the busbar 64a and an electrical contact, for example to a battery module 102 connected to the busbar 64, is established.

### Reference signs

- 1: threaded insert
- 2: outer circumference
- 4: external thread
- 6: thread
- 8: head
- 10: flange
- 11: diameter of the head
- 12: diameter of the external thread
- 14: diameter of the flange
- 16: annular surface
- 18: screw drive
- 20: internal hexagon
- 22: connection geometry
- 24: depression
- 26: outer contour
- 28: screw-in direction
- 30: end
- 32: edge of the depression
- 34: free end of the threaded insert
- 36: through-opening
- 38: internal thread
- 40: area of the screw drive
- 42: diameter of the internal thread
- 43a: area of the internal thread
- 43b: area of the external thread
- 44: contact screw
- 48: undercut
- 52: form-fit element
- 53: undercut of the form-fit element
- 54: latching protrusion
- 56: circumferential direction
- 58: latching surface
- 60: touch protection
- 60a: touch protection of the screw
- 62: contact assembly
- 64: busbar
- 64a: second busbar
- 66: contact surface
- 66a: contact surface of the second busbar
- 68: inner diameter of the touch protection
- 70: opening
- 72: recess
- 74: housing
- 76: shoulder
- 78: protrusion
- 80: hole
- 82: diameter of the hole
- 84: horizontal surface
- 86: external thread of the screw
- 88: through-hole
- 90: screw head
- 92: screw flange
- 94: supporting surface
- 96: part
- 98: thread-free area
- 100: length
- 102: battery module

## Claims

1. Threated insert (1) to screw into a busbar (64), particularly into a busbar (64) of a battery module (102), wherein the threaded insert (1) comprises a self-tapping or self-forming external thread (4).

2. Threaded insert (1) according to claim 1, wherein the threaded insert (1) has a through-opening (36) which penetrates the entire threaded insert (1) and which comprises an internal thread (38).

3. Threaded insert (1) according to claim 2, wherein the internal thread (38) extends in the longitudinal direction (28) of the threaded insert (1) over a longer area (43a) than the external thread (4) of the threaded insert (1).

4. Threaded insert (1) according to one of claims 1 to 3, wherein the threaded insert (1) comprises a head (8) which is provided with a screw drive (18).

5. Threaded insert (1) according to claim 4, wherein the head (8) is configured as a cylinder head with a flange (10).

6. Threaded insert (1) according to one of claims 4 to 5, wherein the internal thread (38) of the threaded insert (1) extends up to the end (34) opposite the screw drive (18).

7. Threaded insert (1) according to one of claims 1 to 6, wherein the threaded insert (1) comprises a touch protection (60) made of an electrically insulating material.

8. Threaded insert (1) according to claim 7, wherein the head (8) is provided with a form-fit element (52) which holds the touch protection (60) in a form-fitting manner on the threaded insert (1).

9. Threaded insert (1) according to one of claims 7 to 8, wherein the threaded insert (1) is frictionally connected to the touch protection (60).

10. Threaded insert (1) according to one of claims 7 to 8, wherein the touch protection (60) is injection molded onto the threaded insert (1).

11. Contact assembly (62) with a threaded insert (1) from one of the claims 1 to 10, with a busbar (64) and with a contact screw (44) that can be screwed into the threaded insert (1).

12. Contact assembly (62) according to claim 11, wherein the busbar (64) comprises a thread-free hole (80) for receiving the threaded insert (1).

13. Contact assembly (62) according to one of claims 11 to 12, wherein the threaded insert (1) is screwed into the busbar (64) and in particular into a thread (6) in the busbar (64) cut with its external thread (4).

14. Contact assembly (62) according to one of claims 11 to 12, wherein the threaded insert (1) is pressed into the busbar (64).

15. Contact assembly (62) according to one of claims 11 to 14, wherein the contact screw (44) extends through a second busbar (64a) and is screwed into the threaded insert (1) in the longitudinal direction (28) of the threaded insert (1).
